# EUROPEAN PATENT APPLICATION

(11) **EP 1 988 724 A1**
(43) Date of publication of application: **05.11.2008**
(21) Application number: 07712562.3
(22) Date of filing: 09.02.2007
(51) Int. Cl.: H04Q 7/28

(54) **METHOD AND SYSTEM FOR ESTABLISHING A DIRECT RADIO COMMUNICATION BETWEEN TWO OR MORE USER DEVICES IN A CELLULAR MOBILE COMMUNICATION SYSTEM**

(30) Priority: 13.02.2006 ES 200600323
(71) Applicant: Vodafone Group PLC, Newbury Berkshire RG14 2FN (GB); Vodafone España, S.A., 28108 Alcobendas (ES)
(72) Inventor: ALMODOVAR HERRAIZ, Daniel, E-28029 Madrid (ES); CABALLERO HERRERO, José Eugenio, E-28044 Madrid (ES); RUBIO ANDRES, Francisco Javier, E-28031 Madrid (ES)
(74) Representative: Carvajal y Urquijo, Isabel
(86) International application number: PCT/ES2007/000072
(87) International publication number: WO 2007/093653

(57) **Abstract**

The invention relates to a process for setting up direct radio communication between two or more user devices within a mobile cellular communications system, said users subscribing to the same operator, comprising:
- using a cognitive radio technique to detect spectrum resources available for radio communications in a certain area within which said at least two user devices are located,

**characterized in that** the process further comprises:
- selecting at least one resource from among the available resources, said resource being a resource of the operator common to said two or more user devices, and
- setting up a direct radio link between said two users using said detected free resource of the operator.

The invention also relates to a system for setting up direct radio communication between two or more user devices within a mobile cellular communications system.

## Description

### Field of the Invention

Within the field of the mobile telecommunications, the present invention relates to the capacity of knowing the radio environment in which a mobile terminal is located and making decisions based on this knowledge. More specifically, it relates to the possibility of setting up direct radio communication between terminals forming part of a cellular system by making use of cognitive radio techniques.

### Background of the Invention

The cognitive radios are a relatively recent concept in the world of R&D (first mentioned by Joseph Mitola: "Cognitive Radio. An Integrated Agent Architecture for Software Defined Radio Dissertation", Royal Institute of Technology, May 8, 2000); however, it already holds the interest of the industry and will certainly be present in telecommunications systems of the years to come. Cognitive radios are based on the fact that the communications device of the user is able to know the radio environment in which it is located and to make decisions with this knowledge (for example, whether or not it can transmit, and what optimal spectrum should it use when transmitting so as to not produce interferences). One of the aspects relating to this idea is that current radio communications systems do not make full use of the entire spectrum available to them, i.e., given any instant of time and place (within the geographic area authorized for the system) it is very probable that there is spectrum available for more communications (transmission/reception) than what are taking place. For example, this would allow a user device, provided with cognitive radio intelligence, to scan the frequencies at this point and use those frequencies which are free (i.e., unused by the system).

In addition, direct radio communication between user devices is a concept that is known and used in commercial solutions, whether in completely autonomous systems (for example, walkie-talkies) or as a functionality present in cellular systems (for example, TETRA). It is based on the fact that mobile user devices can communicate directly with one another if they can mutually "see" one another from the radio point of view. The most typical communication is voice communication, commonly following a half-duplex model (only one can speak at a time). In the event that this direct radio communication takes place within a cellular system, it could be handled exclusively by the terminals, without the intervention of the network, or it could be assisted, i.e., with aid or control by the network nodes of the cellular system, such as the base stations. This communication is direct in the physical layer, i.e., the radio signal going from one device to another; therefore, it should not be confused with other concepts relating to direct communications in higher layers, such as for example the popular "peer-to-peer" communications at IP level (where the physical signal actually traverses many intermediate nodes between one user device and another).

The PTT (Push-To-Talk) concept originally relates to a method of communication in half-duplex lines consisting of pushing a button and holding it to be able to transmit (i.e., speak) and releasing it to be able to receive (i.e., listen), being one of the oldest mobile telephony protocols. Recently the term PTT (Push-To-Talk) is being used more to relate to a functionality present in mobile telephones and associated to a service offered by the mobile operator, such that the described behavior is imitated; for example, within a group of users subscribed to the service, one of them can speak (only one at a time) by pushing the PTT button of his or her mobile terminal and the others will instantly hear him or her through the speakers of their telephones. A popular implementation of this service in the industry, known as PoC (Push to Talk over Cellular), now in process of standardization, is based on packet transport (GPRS, UMTS) and SIP and RTP protocols.

The concept of relaying techniques is normally combined with other concepts such as that of self-organizing networks (self-configuring networks, ad-hoc networks, mesh networks, etc.). It is a very broad concept that is currently under very intense research. The aspect that is of the most interest for the invention herein described relates to the possibility of broadening coverage to enable communication between users who do not mutually see one another from the radio point of view. For example, if there is a mobile device of user A which is within the range of another one B, and at the same time a third device C which is also within the range of B, but such that A and C do not see one another (i.e., there cannot be direct radio communication between both), then by using relaying techniques, B can be a bridge between A and C so that they can speak to one another (such that there would be a direct radio signal A-B section and another B-C section). This relaying can range from a simple repetition of the physical signal up to more complex algorithms implying addressing and routing.

There are several systems which comprise the idea of direct communication between mobile terminals within a cellular system, the combination in a single device of a cellular terminal with a walkie-talkie or the concept of generic or "universal" walkie-talkie devices.

Thus, for example, PCT patent application with publication number WO 98/35515 describes the idea of direct communication between mobile terminals with a special frequency, or German patent application DE 10006688 relates to a system combining GSM with DECT. In relation to commercial solutions, the TETRA radio communications system, which includes a direct mode between terminals, and Motorola terminals provided with the MOTOtalk off-network digital walkie-talkie functionality, which combine a conventional cellular telephone with a conventional walkie-talkie, can be mentioned.

However, none of them coincides with the invention explained below. The key points distinguishing this invention are the combination with cognitive radio techniques and making use of free spectrum resources of the mobile operator (i.e., belonging to the latter under a license).

In the existing literature, when speaking of the possibility of using cognitive radio techniques within a system such that user devices can use the free radio resources detected in the system, it is assumed that said devices would operate as standard devices of the system (for example, a GSM mobile would continue to be a GSM mobile, or a 4G terminal would be a terminal according to how the functions of a terminal in a 4G system are defined), but not for other uses, such as the direct radio communication described in the present invention.

It is known that abbreviations and acronyms are frequently used in the field of mobile telephony. A glossary of acronyms / terms that are used throughout this specification is provided below:
- ARFCN: Absolute Radio Frequency Channel Number
- BCCH: Broadcast Control Channel
- BSC: Base Station Controller
- BTS: Base Transceiver Station
- CCDC: Cellular Cognitive Direct Communication
- CDM: Code Division Multiplex
- FDM: Frequency Division Multiplex
- FR: Full Rate
- GMSK: Gaussian Minimum Shift Keying
- GSM: Global System for Mobile Communications
- GPRS: General Packet Radio Service
- HLR: Home Location Register
- R&D: Research and Development
- IP: Internet Protocol
- OTA: Over The Air
- SCH: Synchronization Channel
- SIM: Subscriber Identity Module
- MSC: Mobile Switching Centre
- PTT: Push To Talk
- RTP: Real-time Transport Protocol
- SDCCH: Autonomous Dedicated Control Channel
- SMS: Short Message Service
- SIP: Session Initiation Protocol
- TCH: Traffic Channel
- TDM: Time Division Multiplex
- TETRA: Terrestrial Trunked Radio
- TS: Time Slot
- UMTS: Universal Mobile Telecommunications System

### Description of the Invention

The invention relates to a process and to a system for setting up direct radio communication between two or more user devices within a mobile cellular communications system according to claims 1 and 12, respectively. Preferred embodiments of the process and of the system are defined in the dependent claims.

The invention is primarily based on the combination of the "cognitive radio" and "direct radio communication between mobile terminals" concepts. Secondarily and optionally, according to the particular embodiment of the invention, the latter can also incorporate "Push-To-Talk" and "relaying technique" concepts or mechanisms.

The general formulation of the proposed invention is that within a mobile cellular communications system, preferably in a manner controlled by the operator, the user devices, alone or assisted by the network, make use of cognitive radio techniques to set up direct radio communication between them, making use of the free spectrum resources of that mobile system offered by said operator, at the time and in place in which they are located.

Therefore, a first aspect of the invention relates to a process for setting up direct radio communication between two or more user devices within a mobile cellular communications system, said two or more user devices using a network of the same operator, comprising:
- using a cognitive radio technique to detect spectrum resources available for radio communications in a certain area within which said at least two user devices are located,
characterized in that the process further comprises:
- selecting at least one resource from among the available resources, said resource being a resource of the operator common to said two or more user devices, and
- setting up a direct radio link between said two users using said detected free resource of the operator.

By means of the present invention, user devices (mobile terminals) thus make use of the free resources detected by cognitive radio techniques for an operation which, though it may be authorized by the operator, it is not the standard operation of the system (for example, the mobile would not act as a GSM mobile but rather as a walkie-talkie).

In other words, the invention is aimed at using the licensed spectrum of the operator -but not using it at a determined time and place- to set up direct radio communication between two user devices subscribed to said operator.

By means of the use of the cognitive radio technique the user device is allowed to know its radio environment, such that it detects and selects free resources in the cellular system to which the user is subscribed, and which can dynamically change that resource selection as the radio environment changes.

Preferably, in addition to being free, said resource is a resource not interfering with the normal service of the operator; i.e., by means of some cognitive radio techniques, the presence of free channels or resources in the cellular system-i.e., those which are not being used is detected, -and for setting up the direct radio link a resource is used which does not affect the correct operation of the system (i.e., it does not cause interferences) if the user device uses it.

Preferably the direct radio link that is described in this invention is set up in a manner controlled by the operator. Some examples of possible control methods would be: the conditions or terms of the subscription (for example registration in the service, limitations of use, etc.), the specific mechanisms to that effect introduced in the user terminal and/or in the identity card of the user (for example the SIM card in the GSM system), or the signaling with the mobile network in the event that there is communication with it and use is made of the assisted mode in the implementation of the invention.

The use of the cognitive radio technique for knowledge of the radio environment can be carried out by the user device alone (autonomous) or assisted by the network. It can also be carried out manually (with intervention of the user) or automatically (without intervention of the user).

Control mechanisms are preferably included such that it is detected when the radio environment changes, and the resource that was being used is left free and it is changed to a new free resource.

According to a preferred embodiment, the process includes constituting a CCDC group formed by said two or more user devices. In other words, the process of the invention preferably uses a management algorithm for the constitution of a group of CCDC users (i.e., users who can communicate with one another by making use of the direct radio communication based on free resources of the cellular system), the coordination of free resources to be chosen and used among the users of the same CCDC group (both at the time of the constitution of the group and later, dynamically, when the radio environment of at least one of the members changes, which obliges switching the free resource), and the coordination of resources to be used between different groups of users when there is a geographic overlap between some of the members of two groups.

The invention optionally comprises using any relaying technique which, by means of one or several radio jumps, places in communication two users of the same CCDC group even though these users are not located in direct radio range. As a result of the application (optional) of relaying techniques (also related to the concepts of ad-hoc networks, self-configuring networks, etc.), an improvement over the basic operation of the process of the invention can be provided.

The PTT mode can also preferably be included in the user terminals of the CCDC group such that they have the experience of a PTT user, consisting of pushing and holding the PTT button to speak, and releasing the button to hear through the speaker. Also, in the event that any of the members of the CCDC group has communication with the mobile network, any mechanism can optionally be added which allows the inclusion in a cellular PTT service of the mobile operator of CCDC users, i.e., they make use of direct radio communication based on free resources. Therefore, the same PTT group could have as many standard mobile users (which could be found in different geographic areas) as mobile users of a CCDC group (located in a determined area).

The process of the invention can also comprise enabling the communication of CCDC users with an emergency post.

A second aspect of the invention relates to a system for setting up direct radio communication between two or more user devices within a mobile cellular communications system, said two or more user devices using a network of the same operator, comprising:
- cognitive radio means to detect spectrum resources available for radio communications in a determined area within which said at least two user devices are located,
- said two or more user devices have a standard communication mode of the cellular system and a direct radio communication mode or walkie-talkie,
characterized in that the system further comprises:
- means of selecting at least one resource from among the available resources, said resource being a resource of the operator common to said two or more user devices, and
- means of setting up a direct radio link between said two users using said free detected resource of the operator.

The number of free resources in a cellular system is inversely proportional to the density of base stations (and by extension, of potential users) in the area. In an urban or semi-urban environment, therefore, it will be difficult to find free resources, i.e., which are not occupied and which can be taken and used without interfering with the system; they are areas where the mobile operator uses the spectrum that it has to the maximum. In contrast, in rural or unpopulated areas, it is very probable that free resources can be found; it could be said that the mobile operator has excessive or extra spectrum.

The invention covers both cases of making use of the free spectrum, both in an urban environment (for example, in cities) or semi-urban environment, as in a rural environment, provided that an algorithm is implemented which dynamically searches for the gaps or free channels and makes use of them without interfering with the system (without reducing the capacity). Nevertheless, it is observed that the most interesting applications would be in the rural or unpopulated scenario.

### Brief Description of the Drawings

A series of drawings which aid in better understanding the invention and which are expressly related with an embodiment of said invention presented as an illustrative but non-limiting example thereof is very briefly described below.

Figure 1 shows how a terminal can detect and choose a free resource.

Figure 2 is an illustrative diagram of a group of terminals operating in direct radio mode (CCDC).

Figure 3 depicts the functional block diagram of a specific terminal of the invention, having both standard GSM mode and direct radio mode.

### Description of a Preferred Embodiment of the Invention

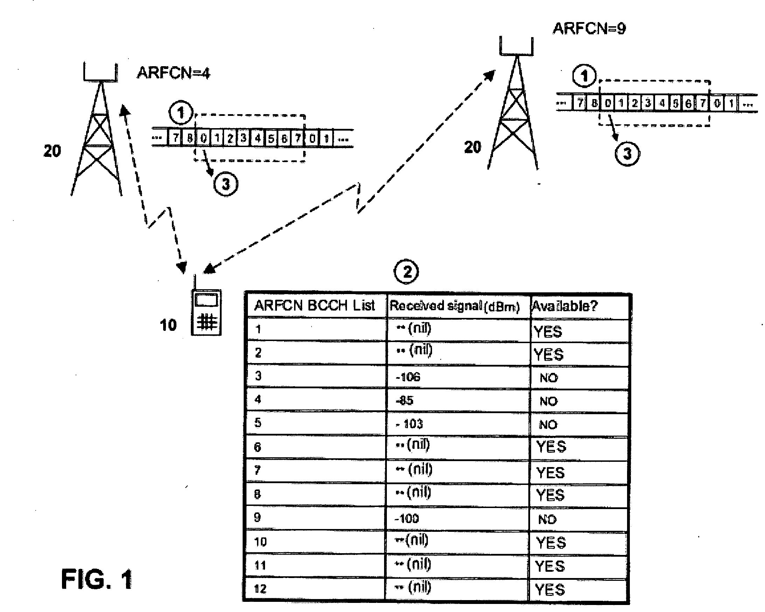

Figure 1 shows how a terminal can detect and choose a free resource: in this case, a frequency of the spectrum of the operator that is not used in the area and the use of which does not interfere with the operation of the network.

Firstly, it involves finding free channels or resources in the cellular system -i.e., those which are not being used, and which preferably do not affect the correct operation of the system (i.e., they do not cause interferences) if the mobile device uses them. Cellular systems mainly use the multiplex of three types of resources: frequency (FDM), time (TDM) and codes (CDM). What is known as resource or channel is usually a combination of them.

In the GSM system a channel corresponds to the combination of a frequency and a time slot (TS). Every frequency consists of two paired carriers of 200KHz+200KHz in the 900, 1800 (Europe) or 850, 1800 (America) bands. Furthermore, for every frequency, time is divided into consecutive segments or frames (of 4.615 ms every frame), such that every frame has eight time slots for setting up differentiated communications (see Figure 1, element 1). Therefore, an example of "GSM channel" would be the one constituted by the frequency ARFCN=11 (892.2 MHz uplink carrier + 937.2 MHz downlink carrier) and the time slot TS=3 (slot number 4 of the 8 existing in the frame - since the GSM system numbers them from 0 to 7). The uplink carrier is used for communication from the terminal 10 to the base station 20, whereas the downlink carrier is used for communication from the base station 20 to the mobile terminal 10 (according to the numbering indicated in Figure 1). In the GSM system, this division in time into frames and slots requires a synchronization of "clocks" between the base station and the terminal, such that both are exactly coordinated with regard to when each frame and each time slot begins.

The existence of free channels or resources and the selection of one of them are carried out by means of cognitive radio techniques. The most immediate scheme in this case consists of the mobile device sweeping the entire spectrum of that mobile system, and specifically sweeping the known frequencies of the operator providing service in order to see the signal levels existing on the air. Then the channel/channels which do not have activity are chosen (see Figure 1, element 2). As previously mentioned, in order to consider the resource as actually free, in addition to there being no occupation of the channel at that time, there must be an assurance that when it is taken it is not going to affect the operation of the system (how it is assured would depend on each system in particular).

Different cognitive radio techniques applicable for the detection and selection of the resource to be used can be used, such as for example, those that are based on sweeping frequencies, on databases, on assistance from the network, etc.

In the case of the GSM system, the typical frequency plan used by GSM mobile operators divides the plan of available frequencies into two categories: those which are thought to always be present on the air (since the base stations use them to transmit or broadcast information, for example, BCCH), and those which can be present on the air or not, depending on the existence at that time of user communications in that place (for example SDCCH for SMS and TCH for voice calls). In sweeping GSM frequencies corresponding to an operator (which are a sub-set of the entire GSM), the absence of signal level in a frequency of the second group does not provide an assurance that this frequency is actually free in the area; in contrast, the absence of signal in a frequency of the first group (calls from now BCCH frequencies) indicates that there is no base station in the area using it and, by extension, that it is available for a new communication without interfering in the correct operation of the cellular system. As a reference value, it would be considered "clean" and available at any BCCH frequency the radio signal level of which is less than -110 dBm, which would assure that not only that frequency, but also its adjacent frequencies, are not being used by a base station in the area (see Figure 1, element 2). In the event that several are available, the optimal BCCH frequency to be chosen would be the one in which the sweep is surrounded by the largest number of other clean frequencies both above and below (given that the user can move and change his or her radio environment). An extreme case would be the total absence of GSM coverage, in which all the BCCH frequencies would be clean and free. The transmission of broadcast information from the base station, as previously mentioned, is always contained in the downlink carrier, of the two constituting the BCCH frequency. Furthermore, it only takes place in slot TS=0 of the eight existing in the GSM frame (see Figure 1, element 3), although if the scan lasts long enough, there will be no problem in detecting that signal (in fact, since the frame lasts only 4.615 ms this is very easy to achieve). A very basic scan would only detect signal level, whereas a somewhat more advanced but equally simple scan could further be synchronized with the base station and read its broadcast information (SYSTEM INFORMATION) for those frequencies in which signal is detected.

As previously indicated, the most interesting applications of the present invention are in the rural or unpopulated scenario. In this case, some examples of applications of the invention could be:
a) walkie-talkie service between explorers or mountaineers (for example in high mountain regions, jungle, desert, etc.), between them and also optionally towards an emergency point of which one of them has direct radio visibility;
b) leisure service providing communication to excursionists, hunters, boy-scouts, etc. in forests or unpopulated areas;
c) communication service between vehicles in areas with little or no coverage, such as boats participating in a regatta, all-terrain vehicles in a rally, small airplanes, etc.

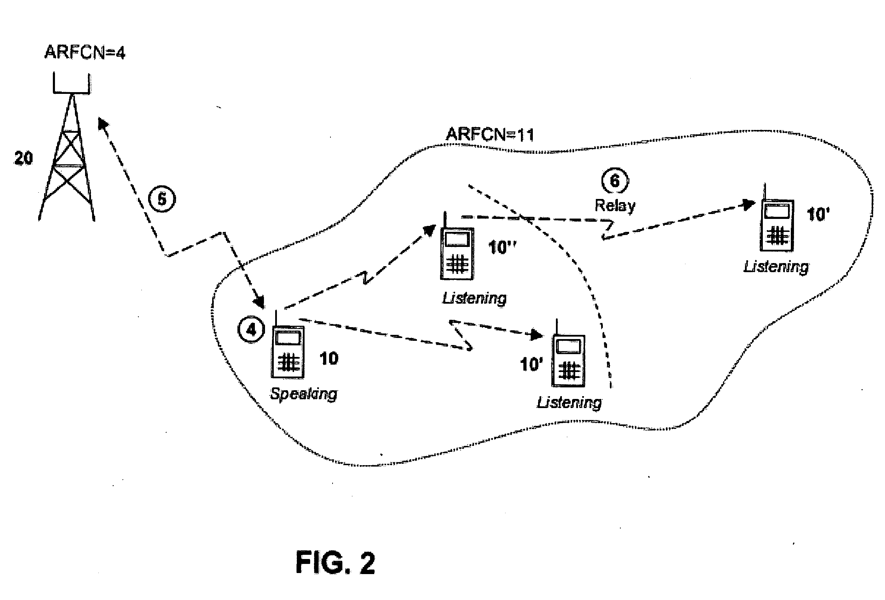

In all these cases, by means of the present invention, given that the operator cannot offer a service with its network, the operator allows its users to be able to set up direct radio communication between them, and optionally with the mobile network (if at least one of the members of the group has coverage) or with emergency posts (which in turn can be completely local or connected with the outside world by any mechanism, for example mobile network, landline telephone, radio station, etc.). This situation is reflected Figure 2, which is an illustrative diagram of a group of terminals 10, 10', 10" operating in direct radio mode. In this case the CCDC group is formed by four users, all using ARFCN=11, after a manual or automatic pooling, and using PTT protocol to decide who speaks and who listens. In the situation shown in Figure 2, out of the four users, the user of the terminal 10 is speaking, whereas the terminals 10' are listening; likewise, the terminal 10" is listening, but at the same time is in relay mode so that one of the terminals 10' can be in fact listening. There can further be communication between this CCDC group with the mobile network, providing it with assistance in the direct mode, and standard voice and data service.

The invention can be implemented both in the cases in which in the area where it is used there is not coverage of the system, and when there is coverage of at least one base station (which could optionally provide some type of assistance to the mobile device to help in its cognitive radio tasks and in the direct radio communication service in general). In the event of the existence of network service (because there are base stations providing coverage) for any of the members of the CCDC group, the invention would allow in its user device making use for communication: only of the direct radio mode, only of the standard mode with the mobile network, or of both modes simultaneously (see Figure 2, element 4; also Figure 3).

Another typical case of the absence of coverage is indoor areas, such as caves or abysses (for example the invention would enable communication among a group of speleologists). However, this case also occurs in cities (for example, garages, basements) and then, the free resource that the user has occupied indoors could interfere with the service of the cellular system as soon as the user goes outside. Therefore, a preferred embodiment of the invention also includes control mechanisms which allow leaving the resource free (and optionally switching to another) as soon as it is detected that the radio environment has changed. This is applied in any circumstance of changing the radio environment, i.e., not only the circumstances of leaving the indoors, but also for example in other circumstances, such as, for example, vehicles traveling large enough distances such that the base stations of their area change.

In the preferred embodiment of the invention a specific mobile terminal is used which allows not only the standard communication mode of the cellular system but also the direct radio communication mode. The direct radio communication mode would in fact be a simplification of the standard mode: some resources, such as the purely radio transmission and reception resources, would be reused and many of the protocols (mainly signaling and management protocols) of the standard system would not be needed given that they are designed to interact with the network; in contrast simple direct radio communication control protocols would be required (see Figure 3).

Optionally, since one of the services associated to the invention is that of group voice communication, it is natural to include the PTT experience in the mobile terminal (i.e., push and hold the PTT button to speak, and release the button to hear through the speaker). This allows basing the user device on current PTT mobile terminals. Also, at the network level, if there is coverage from any base station in the area, the invention allows the combination of the direct radio mode with the PTT service based on the network of the operator. In other words, the invention enables a group of users of the PTT service to be able to include both users communicating through the cellular network and users communicating by means of direct radio mode. In the example of mountaineers, it is possible to imagine a PTT user in the mountain who in turn has group voice communication with another user nearby with whom communication is in direct radio mode and with other distant users with whom communication is through the network of the cellular system. Although the combined cellular-walkie-talkie terminals have already been proposed in prior inventions, there is a difference since the terminal proposed in this invention includes cognitive radio intelligence to recognize its radio environment and make use of the free resources in the licensed spectrum of the mobile operator (see Figure 3).

In the case of the GSM system, the terminal adapted to the invention includes a standard GSM mode and a direct radio mode (or walkie-talkie mode) which, from the point of view of the technical implementation, is a simplification of the standard mode, sharing some of its resources such as the keypad, display, contacts, SIM card, radio subsystem (antenna, amplifiers and filters, transmitter and receiver: GMSK modulation, codecs, etc.) and eliminating others, such as higher layer mechanism (Call Control, Mobility Management, etc.), i.e., those associated to the dialogue with the base stations and the network. Some features are optional in the walkie-talkie mode, and can be included or not depending on the particular implementation, for example power control, encrypting, etc.

Figure 3 shows all these concepts in an illustrative diagram of a possible implementation of a terminal. This terminal would conserve the standard protocol stack of a GSM system (element 200) and would further have a specific protocol stack for the direct radio mode (element 201). Specifically, the standard GSM stack in the signaling plane, as can be found in any technical specification of the GSM system, consists of the following layers from top to bottom: Radio, LAPDm (Link Access Protocol on the Dm Channel), RR (Radio Resource Management), MM (Mobility Management) and CC/SS/SMS (Call Control/Supplementary Services/Short Message Service). In comparison, the protocol stack of the direct radio mode would be much simpler, because it would not need the GSM higher layers; specifically, as shown in Figure 3, it would have the following layers from bottom to top: Radio (element 100), MACd (Media Access Control for direct mode, for example management of the time slots - element 101) and CCd (Connection Control for direct mode, for example cognitive radio procedures, frequency pooling process among the members of a group, etc. - element 102). In the lower layers of both protocol stacks there are common elements which would be reused in the case of optimal implementation of the terminal; specifically, the entire Radio layer as well as part of the media access functionalities (in other words, part of the LDAPm and RR layers in standard GSM mode and part of the MACd layer in direct mode) would be uniquely implemented in the terminal, sharing hardware and software resources (element 202).

Continuing with the description of Figure 3, above of the protocol stacks of each mode there is a mode switching function (element 103) which would allow selecting one of the two operating modes, either exclusively or simultaneously. Then there is the Operative System of the terminal (element 104), and above it the input/output devices (such as the, keypad, display, PTT button, speaker or microphone - element 105), the storage devices (memory, databases, files in SIM card - element 106), and any other resource of the terminal that could be used indistinctly, exclusively or simultaneously, by the two operating modes (element 107).

A very basic operating mode is that the mobile terminals of a group of users in direct mode all transmit and receive in the same resource or channel. In standard GSM the terminal transmits in an uplink frequency and in a certain time slot, and receives or listens in the paired downlink frequency (located 45 MHz above) in another different time slot separated by two or more time slots (for the purpose of being able to transmit and receive simultaneously); these frequency and time slot values are chosen by the network in the set up of the call and are communicated to the mobile. In a basic implementation of the invention, all the mobile terminals of the CCDC group can be made to transmit and receive in the same carrier (established by them by means of any mechanism or with assistance of the network, if there is any), using the PTT mechanism as a means for controlling the channel (half-duplex model). In more advanced implementations, a synchronism mechanism can be added between terminals of the same CCDC group such that they can continue to use the frame and slot time structure of the GSM system and such that they therefore need a single carrier and a time slot, leaving the other slots of that same frequency free for other groups.

The invention can also optionally involve modifications in the network of the operator, i.e., it allows both an "autonomous" operating mode, in which the terminals use their own resources as well as the standard information from base stations if there is one in the area, and an "assisted" operating mode, in which the network modified specifically for this invention, provides them with special information.

For the case of GSM, this assisted mode would require the invention to include minor modifications in the software of the BTS, BSC and MSC nodes (for example, changes in the SYSTEM INFORMATION messages, or a new protocol for the dialogue between the network and the mobile terminal that is going to use the walkie-talkie mode). This new software could be loaded only in the areas where the operator wants to provide this type of service (for example, rural areas) (Figure 2, element 5).

The system preferably includes (direct or indirect) supervision and control mechanisms of the service provided to the user by the mobile operator, which can be: a) the SIM card and the information it contains; b) the mobile terminal, for example special records of use of the service (logs), specific integrated algorithms, etc.; c) the network, with standard records in the non-modified network (autonomous mode) or special records and specific algorithms in the network modified for the invention (assisted mode); d) the user subscription in the HLR and in the provisioning systems of the operator.

In addition, according to a preferred embodiment of the invention, the latter uses relaying techniques (Figure 2, element 6). In the most basic mode, communication could only occur between those user devices which are located under mutual radio range (for example, A sees B, C sees B, A and C do not see each other-then A cannot directly listen to what C says and vice versa). An improved operation incorporating relaying techniques allows the communication of all the users of the group with one another, such that some user devices can be a bridge to forward the signal towards the destination based on one or several jumps (each jump involving direct radio communication). These techniques can range from mere relaying in the physical layer of all that reaches a device (for example, B relays the signal it receives from A, whereby it also reaches C, which is within its range), to intelligent algorithms in higher layers (for example, layers 2, 3 of the OSI model) which would involve some type of addressing and the application of protocols between devices (for example, route table maintenance). It is important to stress that radio communication is always direct between mobile terminals that see one another, whereas at higher levels, there can be end-to-end communication between mobile terminals that do not see one another. The invention contemplates both the case of user-to-group communication (for example, typical of voice calls with PTT experience) and user-to-user communication (without visibility for the rest of the group). It also contemplates both voice and data service.

In the case of the GSM system, assuming that all the mobiles in the CCDC group transmit and receive in the same frequency and same time slot, the synchronism mechanism being implemented between them, a very simple relaying mechanism can be added, making each mobile relay whatever reaches it in one time slot in another time slot different from the former (and two or more slots separated from the first, by transmission and reception limitations typical of the GSM system).

Finally, the invention also includes other implementation variations which are within the general concept explained in the invention, such as for example:
- algorithm for detecting and selecting a free resource: autonomous or assisted by the network;
- algorithm for detecting and selecting a free resource: manual (with the intervention of the user, for example, selecting from a list), automatic (the device performs it without requiring interaction of the user) or mixed;
- algorithm for pooling the chosen free resource within the users of the same group: manual (for example, all choose the same one on their lists) or automatic (for example, through Bluetooth communication, putting all the devices together for several second);
- algorithm for preventing the collision of the chosen resource with other groups of users located within the same area;
- algorithm in each user for dynamically changing (or eliminating) a resource as the radio environment changes and for maintaining communication with the other users;
- algorithm for power control in the devices, which allows saving the battery and reducing interferences;
- algorithm for reserving a free channel or resource which allows communicating with an emergency post existing in the area;
- algorithm for enabling relaying from one device to another; etc.

It is considered that these and other algorithms allow diverse variations or particular implementation solutions without altering the general concept of the invention herein proposed.

A very basic and easy-to-implement implementation of the invention in the case of the GSM system would be the following:
- Terminal with standard mode and direct mode (walkie-talkie), including PTT button (see Figure 3). Both modes operate exclusively (one or the other but not at the same time)
- Manual selection of the mode, standard or direct, by the user.
- Only voice service in direct mode (not data).
- Unique and fixed codec in voice communication, for example GSM FR 16 Kbps.
- Without power control. Use of the maximum power of the mobile at all times (for example, 1 W) to assure the largest possible coverage.
- The mode assisted by the network is not implemented; everything is autonomous in the terminals.
- The terminal performs a sweep of the BCCH frequencies of the operator (known by some mechanism, for example a small database in the terminal or SIM card, which can be updated by the operator by means of the OTA functionality) and it presents those which are free to the user in the display so that the user manually selects one. If there is none, it is indicated to the user that the service is not available. The criterion for determining availability will be to measure a signal level of less than -110dBm in that frequency. It must be taken into account that each GSM frequency is actually a pair: downlink frequency and uplink frequency. In this implementation the former is used only for detecting base stations, not being usable by the terminals in direct mode, whereas the latter (uplink part) is the one used for communications in direct mode. This decision of not using the downlink part, even though it is also available, sacrifices capacity of the CCDC system, but in exchange it greatly simplifies the implementation, both of the terminal and of the interference detection mechanisms. In any case, the sweep must be carried out for both the downlink part (to detect GSM base stations) and for the uplink part (to detect other GSM mobiles in the area, both in standard mode, which will exist only if there is a base station, and in CCDC direct mode, which may exist even though there is no base station).
- The users of the CCDC group have to agree with one another to all manually choose the same frequency (for example ARFCN=11), and the terminals will automatically take the uplink carrier associated to this frequency)
- There is no synchronism mechanism between terminals; therefore they cannot make use of time multiplex (i.e., the division into time slots).
- The mobile terminals transmit and receive (alternatively, by means of the PTT protocol, in half-duplex mode) in the same frequency (the manually selected frequency).
- There are no relays, each terminal can speak or listing only to those terminals with its direct radio range (such that the broadcast of messages to the entire group is not assured by the implementation, but rather it is up to the users themselves).
- The terminal performs regular periodic sweeps to detect changes in the radio environment. If the terminal of a user determines that the BCCH frequency currently in use in the walkie-talkie mode can interfere with the network (upon detecting a signal level greater than -110 dBm in the downlink part of that frequency, which notifies of the proximity to a GSM base station), then it indicates to the user that it has to abandon it or switch to another free frequency. The implementation does not include in this case a frequency update mechanism in the rest of the users; this is also up to the users themselves. The terminal contemplates two different threshold signal levels for detecting a BCCH frequency in use (i.e., a frequency which, with the movement of the user, goes from being clean to being occupied by the network): the first, lowest threshold (-110 dBm in the downlink part of the actual frequency) is useful for indicating to the user that he or she must change frequency, allowing him or her time to coordinate with the rest of the users by means of vocal communication; the second, highest threshold (-95 dBm for the downlink part of the actual frequency), would be associated to an indication of a definitive loss of that frequency, since the mobile network service would have priority over the direct mode.
- In the case of several groups in the same geographic area, this implementation does not include any mechanism for preventing them from choosing the same resource out of all those that are available (i.e., the same frequency). This is left to chance (since several possible options exist) of the detection mechanism of other groups (i.e., a second set of users which, upon reaching an area and constituting the group, would detect activity in the uplink carrier that is being used by the first group and their terminals would not show it as being among the available options), and finally of the vocal interaction and pooling between groups of users.

Based on this basic implementation, which provides a service with significant limitations from user point of view as well as the inefficiency of the capacity of the system, more complex implementations can be carried out (within the general umbrella of the invention herein described), adding improvements for solving each of these limitations.

For example, the capacity of the system, understood as the number of CCDC groups that can coexist in the same area without interfering with one another, can be hugely increased (in fact, multiplied by 7) by adding a synchronism mechanism between terminals. This would allow reusing the system of dividing into frames and time slots for which any GSM terminal is prepared. The manner of obtaining synchronism between members of the same group, and between different groups, would be to adapt the process that is already used between the GSM base station and the mobiles. To that end, the time slot TS=0 of each uplink carrier (which are the ones used by the CCDC terminals) would be reserved and an SCH mechanism similar to that of the base station would be assembled on it for the purpose of setting clocks between the terminals and which are all coordinated with regard to when each frame and time slot begins and ends. With the implementation of this process, each CCDC group would make use of a frequency and of a time slot, for example ARFCN=11 (uplink carrier) and slot TS=3. Up to 7 groups could share the same frequency (slots TS=1 up to TS=7). Another different approach for increasing the capacity of the system consists of allowing the CCDC groups to also be able to make use of the frequency downlink, not only uplink, carrier. In this case, sweeping BCCH frequencies to detect the presence of base stations must consider not only signal level but also synchronization and decoding of at least one valid broadcast message (SYSTEM INFORMATION) for the purpose of being able to distinguish a base station transmission from a CCDC terminal transmission. Once this aspect is solved, the capacity of the CCDC system would be multiplied by two.

With regard to the range of the system, it would be substantially improved if instead of a single radio jump two or more were possible, i.e., each terminal in listening state (according to the PTT mode) is dedicated to relaying the signal it receives. This is possible in a relatively simple manner if the synchronism mechanism mentioned in the preceding paragraph exists. To that end, there must be not one but two time slots per CCDC group (for example TS=1 and TS=5), such that the former (TS=1) is for direct transmission of what is spoken in PTT mode and the latter (TS=5) is for relays by those who are listening- however, it should be notated that due to GSM requirements, both must be separated by 2 or more slots, so that the terminal can suitably switch between reception and transmission. Then, the mechanism consists of the terminal in listen PTT mode regularly checking the signal level received in both slots (TS=1 and TS=5). If it is larger in the former (TS=1), then it would be dedicated to receiving through that slot and to relaying that same signal through the latter (TS=5) since it is a terminal that is capable of listening directly to who is speaking. In contrast, if the received signal is greater through the latter slot (TS=5), then the terminal will be dedicated to receive through such slot and will not relay anything since it is a terminal to which the original signal original of the one speaking reaches by means of relaying. Taking into account that each radio jump in GSM frequencies and with the maximum power could be several kilometers (for example 5 or 10 km), this considerably increases the total coverage for the CCDC group. In addition, this would be achieved at the expense of reducing the capacity of the system, since instead of 7 groups per carrier; now only 3 groups could coexist (for example using the pairs of slots 1 and 5, 2 and 6, 3 and 7).

Finally, the other limitations of the service to the user would be solved by adding: data service, power control, automated cognitive radio techniques (without manual intervention of the user) for selecting the BCCH frequency and time slot and dynamic changes due to the radio environment, automatic pooling mechanisms within a group and mechanisms for preventing collision with other, relaying mechanisms which assure by means of jumps the maximum possible broadcast to the entire group and also provide user-to-user communications, etc.

## Claims

1. A process for setting up direct radio communication between two or more user devices within a mobile cellular communications system, said users subscribing to the same operator, comprising:
- using a cognitive radio technique to detect spectrum resources available for radio communications in a certain area within which said at least two user devices are located,
**characterized in that** the process further comprises:
- selecting at least one resource from among the available resources, said resource being a resource of the operator common to said two or more user devices, and
- setting up a direct radio link between said two users using said detected free resource of the operator.

2. The process according to claim 1, **characterized in that** in addition to being free, said resource is a resource not interfering with the normal service of the operator.

3. The process according to any of the preceding claims, **characterized in that** said direct radio link is set up under the control of the operator.

4. The process according to any of the preceding claims, **characterized in that** it includes detecting that the radio environment has changed and switching to a new free resource.

5. The process according to any of the preceding claims, **characterized in that** the use of cognitive radio technique is carried out by the user device alone or assisted by the network.

6. The process according to any of the preceding claims, **characterized in that** it further comprises constituting a CCDC group formed by said two or more user devices.

7. The process according to claim 6, **characterized in that** it further comprises using relaying techniques for placing two users of the same CCDC group in communication even though such users are not located in direct radio range.

8. The process according to any of claims 6-7, **characterized in that** it further comprises including communication by means of push-to-talk PTT between users of the same CCDC group.

9. The process according to any of claims 6-8, **characterized in that** it further comprises setting up communication of CCDC users with an emergency post.

10. The process according to any of the preceding claims, **characterized in that** said user device operates in standard mode, in direct radio communication mode or in both modes simultaneously.

11. The process according to any of claim 6-10, **characterized in that** it further comprises the inclusion of users of a CCDC group within a group of the PTT (or PoC) service offered by the operator, if at least one of the members of the CCDC group has communication with the network of the operator and can operate with the two modes simultaneously.

12. A system for setting up direct radio communication between two or more user devices within a mobile cellular communications system, said users subscribing to the same operator, comprising:
- cognitive radio means to detect spectrum resources available for radio communications in a certain area within which said at least two user devices are located,
- said two or more user devices having standard communication mode of the cellular system and direct radio communication or walkie-talkie mode,
**characterized in that** the system further comprises:
- means of selecting at least one resource from among the available resources, said resource being a resource of the operator common to said two or more user devices, and
- means of setting up of a direct radio link between said two users using said detected free resource of the operator.
